# EUROPÄISCHE PATENTSCHRIFT

(11) **EP 0 371 555 B1**
(45) Veröffentlichungstag und Bekanntmachung des Hinweises auf die Patenterteilung: **04.05.1994**
(21) Anmeldenummer: 89202984.4
(22) Anmeldetag: 24.11.1989
(51) Int. Cl.: H02M 7/219, H02M 1/12, H02M 3/10

(54) **Schaltungsanordnung zum Speisen einer Last**
Circuit arrangement for powering a load
Disposition de circuit pour l'alimentation d'une charge

(30) Priorität: 30.11.1988 DE 3840304
(43) Veröffentlichungstag der Anmeldung: 06.06.1990
(73) Patentinhaber: Philips Patentverwaltung GmbH, 22335 Hamburg (DE); Philips Electronics N.V., 5621 BA Eindhoven (NL)
(72) Erfinder: Albach, Manfred, D-5100 Aachen (DE); Raets, Hubert, NL-6391 Nieuwenhagen (NL)
(74) Vertreter: Peters, Carl Heinrich, Dipl.-Ing.

(56) Entgegenhaltungen:
- EP-A- 0 298 562
- US-A- 4 219 872
- TELECOMMUNICATIONS AND RADIO ENGINEERING, vol. 41/42, no. 1, Januar 1987, Washington, US, Seiten 140-142; Braslavskiy et al: "Transformerless line-synchronized rectifying voltage converters"

## Beschreibung

Die Erfindung bezieht sich auf eine Schaltungsanordnung zum Speisen einer Last gemäß dem Oberbegriff des Hauptanspruchs.

In der deutschen Patentanmeldung P 37 22 337.2 ist eine Schaltungsanordnung zum Übertragen elektrischer Energie aus einer Wechselspannungsquelle beschrieben, die in bestimmten Zeitintervallen zum Einspeisen der Energie in einen Energiespeicher mit diesem verbunden ist, mit einem durch eine Ansteuerschaltung periodisch betätigten Schalter zum Entnehmen der Energie aus einem Energiespeicher. Bei dieser Schaltungsanordnung werden darin hervorgerufene, hochfrequente Störungen dadurch unterdrückt, d.h. von der Wechselspannungsquelle ferngehalten, daß die Ansteuerschaltung den Schalter nur außerhalb der Zeitintervalle leitend schaltet, in denen die Wechselspannungsquelle mit dem Energiespeicher verbunden ist. Diese Anordnung kommt insbesondere bei Schaltnetzteilen zum Einsatz, die Energie aus einer Netzwechselspannung entnehmen und durch die Schaltvorgänge des periodisch betätigten Schalters Störspannungen und -ströme erzeugen, die jedoch nicht in die Netzwechselspannung eingestreut werden sollen. Die Verbindung bzw. Trennung von Wechselspannungsquelle und Energiespeicher erfolgt dabei vorzugsweise durch eine Gleichrichterstufe. In den Zeitintervallen, in denen die Gleichrichterstufe zum Nachladen des Energiespeichers sich im leitenden Zustand befindet, wird dann die Betätigung des Schalters unterbrochen, so daß von diesem keine Störungen über die leitende Gleichrichterstufe in die Wechselspannungsquelle, d.h. auf die Netzwechselspannung, eingestreut werden.

Durch die Unterbrechung der Betätigung des Schalters wird jedoch auch die Energiezufuhr zu einem von dem Schaltnetzteil gespeisten Verbraucher unterbrochen, so daß dieser periodisch ungleichmäßig mit Energie versorgt wird.

Aus der Druckschrift "TELECOMMUNICATIONS AND RADIO ENGINEERING", Vol. 41/42, No. 1, Januar 1987, Washington US Seiten 140 - 142; Braslavskiy et al: "Transformerless line-synchronized rectifying voltage converters" ist eine transformatorlose, netzsynchronisierte, gleichrichtende Spannungsumsetzerschaltung bekannt. Diese umfaßt eine Anordnung aus drei Gleichrichtern, die bei Netzspannung arbeiten, sowie zwei Energiespeicher und Spannungsteilerschaltkreise, die Kondensatoren umfassen, die abwechselnd über eine Last entladen werden. Da jeder der Energiespeicher- und Spannungsteilerschaltkreise nur während einer Halbwelle der Leitungsspannung Leistung an die Last überträgt, soll durch die Anordnung zweier dieser Schaltkreise eine Glättungskapazität vermieden werden, wie sie bei Verwendung nur eines Energiespeicher- und Spannungsteilerschaltkreise benutzt wird.

Eine derartige Spannungswandlerschaltung ist jedoch allein schon aufgrund der untrennbaren, unmittelbaren Leitungsverbindung zwischen den Netzanschlüssen und der Last zu jedem Zeitpunkt durchlässig für Störungen. Aus der zitierten Druckschrift ist darüber hinaus auch kein Hinweis entnehmbar, wie eine derartige Schaltungsanordnung als für Störungen undurchlässig ausgelegt werden könnte.

Die Erfindung hat die Aufgabe, eine Schaltungsanordnung zu schaffen, die mit einfachen Mitteln sowohl eine gleichmäßige Energieversorgung der Last gewährleistet als auch eine zuverlässige Unterdrückung der Übertragung von Störungen sowohl von der Last in das Energieversorgungsnetz als auch in umgekehrter Richtung.

Diese Aufgabe wird bei einer Schaltungsanordnung der eingangs genannten Art gelöst durch eine Gleichrichteranordnung, die zu jedem Pol des Energieversorgungsnetzes eine als ersten Zweig einer Graetz-Brücke ausgebildete Gleichrichterstufe umfaßt, zu jeder Gleichrichterstufe einen durch sie aufladbaren Energiespeicher, der an diese gemäß einem ergänzenden Zweig der Graetz-Brücke angeschlossen ist, je ein Schalterelement zum Verbinden jedes der Energiespeicher mit der Last, sowie eine Steuerschaltung, durch die die Schalterelemente - zyklisch der Aufladung der Energiespeicher aus dem Energieversorgungsnetz über die Gleichrichterstufen folgend - außerhalb von Zeitintervallen der Aufladung (Leitphasen der Gleichrichterstufen) leitend schaltbar sind.

Die Erfindung ermöglicht es, mit einem einfachen Schaltungsaufbau die Übertragung von Störungen zu unterdrücken bei gleichmäßiger, ununterbrochener Energieversorgung der Last. Aufwendige Hochfrequenzfilter üblicher Bauarten werden dafür nicht benötigt. Mit der Anordnung können sowohl vom Energieversorgungsnetz als auch von der Last ausgehende Störungen unterdrückt werden. Sie eignet sich sowohl für einphasige als auch für mehrphasige Energieversorgungsnetze, d.h. Energieversorgungsnetze mit einer beliebigen Anzahl von Polen, die je eine Wechselspannung führen, und ist in ihrem Aufbau derart ausgeführt, daß eine Anpassung an die Zahl der Pole des Energieversorgungsnetzes auf einfache Weise in der Art einer Aneinanderfügung von Schaltungsmodulen vorgenommen werden kann. Dabei braucht ggf. die Dimensionierung bereits vorhandener Schaltungsteile beim Hinzufügen weiterer Teile für zusätzliche Pole des Energieversorgungsnetzes nicht verändert zu werden.

Im Betrieb ist für alle Pole des Energieversorgungsnetzes eine zyklische Aufladung der Energiespeicher über die Gleichrichterstufen mit Energie aus dem Energieversorgungsnetz vorgesehen. Im gleichen Zyklus, jedoch zeitlich verschoben, erfolgt dann eine Verbindung der Energiespeicher über die Schalterelemente mit der Last zur Weiterleitung der Energie an diese. Dabei werden die Gleichrichterstufen bevorzugt in nicht gesteuerter bzw. lediglich durch die an sie geführte Wechselspannung aus dem Energieversorgungsnetz leitend bzw. gesperrt geschalteter Bauart ausgeführt. Die Steuerschaltung wird bevorzugt durch die Leitphasen der Gleichrichterstufen zur Betätigung der Schalterelemente gesteuert.

Die Zeitintervalle, in denen die Schalterelemente leitend schaltbar sind (Leitphasen der Schalterelemente), grenzen vorzugsweise nicht überlappend aneinander. Dadurch wird einerseits gewährleistet, daß stets einer der Energiespeicher zur Übertragung von Energie mit der Last verbunden ist; andererseits wird jedoch eine direkte, leitende Verbindung zwischen jeweils wenigstens zwei Energiespeichern vermieden. Dadurch können Ausgleichsvorgänge, die zwischen miteinander verbundenen, unterschiedlich aufgeladenen Energiespeichern auftreten und Energieverluste verursachen, vermieden werden.

Bei einer Schaltungsanordnung nach der Erfindung mit einem wenigstens zweipoligen Energieversorgungsnetz erstreckt sich die Leitphase jedes Schaltelements von einem Zeitpunkt, zu dem die Spannung am zugehörigen Pol kleiner wird als wenigstens eine der Spannungen an den übrigen Polen, über einen der Anzahl der Pole des Energieversorgungsnetzes entsprechenden Teil der Periodendauer der Wechselspannung. So wird z.B. bei einem zweipoligen Energieversorgungsnetz in der ersten Halbperiode der Wechselspannung Energie von einem ersten Energiespeicher über ein zugeordnetes Schaltelement in die Last eingespeist, während in der zweiten Halbperiode der Wechselspannung ein zweiter Energiespeicher über ein zugeordnetes, zweites Schaltelement mit der Last verbunden ist. Entsprechend wird der erste Energiespeicher in der zweiten Halbperiode und der zweite Energiespeicher in der ersten Halbperiode aus dem Energieversorgungsnetz aufgeladen.

In analoger Weise wird die Periodendauer der Wechselspannung bei einem beispielsweise dreipoligen Energieversorgungsnetz (z.B. Drehstromnetz) in drei Teile unterteilt. Die Leitphase einer Gleichrichterstufe befindet sich dann bevorzugt in einem Teil der Periodendauer, in dem die Spannung an dem mit dieser Gleichrichterstufe verbundenen Pol des Energieversorgungsnetzes größer ist als die Spannungen an den beiden übrigen Polen. Kehrt sich dieses Verhältnis bezüglich wenigstens einer der Spannungen an den beiden anderen Polen um, wird die Leitphase der Gleichrichterstufe beendet, d.h. die Gleichrichterstufe geht in den gesperrten Zustand über. In dem mit diesem Zeitpunkt beginnenden Zeitraum bis zur nächsten Leitphase der Gleichrichterstufe kann dann die Leitphase des zugeordneten Schalterelementes stattfinden, wodurch gewährleistet ist, daß der Energiespeicher jeweils nur entweder mit dem Energieversorgungsnetz oder mit der Last verbunden ist.

Für eine einfache Realisierung der vorstehend beschriebenen Betriebsweise sind der Steuerschaltung zum Steuern der Schalterelemente die Spannungen von den Polen des Energieversorgungsnetzes zuführbar. Die Spannungen können in der Steuerschaltung mit einfachen Komparatoranordnungen verglichen werden, um die vorstehend beschriebenen Kriterien für die Einleitung und Beendigung der Leitphasen der Schalterelemente zu gewinnen. Außer einem Vergleich der Spannungen an den einzelnen Polen des Energieversorgungsnetzes kann auch ein Vergleich mit einem Bezugsspannungspegel, beispielsweise einem Nullpotential, ausgewertet werden.

Bevorzugt sind die Schalterelemente als Transistoren ausgebildet und ist in jeden Energieübertragungskreis zwischen je einem der Energiespeicher und der Last über das zugehörige Schalterelemente je eine Diode eingefügt. Diese Dioden verhindern zuverlässig Ausgleichsvorgänge zwischen den Energiespeichern bei unterschiedlichen Aufladungen.

Zum Unterdrücken sogenannter Gleichtaktströme, die insbesondere ausgehend von der Last über parasitäre Kapazitäten gleichmäßig in alle Pole des Energieversorgungsnetzes einstreuen und sich über Teile der Gleichrichterstufen schließen, sind vorteilhaft die Schalterelemente mit einem ersten Anschluß der Last und die Dioden mit einem zweiten Anschluß der Last verbunden und sind ferner die den Dioden zugewandten Verbindungen zwischen den Gleichrichterstufen und den zugehörigen Energiespeichern zyklisch gemäß der Aufeinanderfolge der Leitphasen vertauscht. Die Dioden üben dann eine Doppelfunktion aus.

Zur besonders einfachen und sicheren Steuerung der Schalterelemente in Abhängigkeit von den Leitphasen der Gleichrichterstufen umfaßt die Steuerschaltung zu jedem Schalterelement ein Impedanznetzwerk, das je mit einer Anzapfung mit dem zugehörigen Pol des Energieversorgungsnetzes, mit einem ersten Endanschluß mit einem Steueranschluß des Schalterelements und mit einem zweiten Endanschluß mit dem vom Schalterelement abgewandten Anschluß des zugehörigen Energiespeichers verbunden ist. Dieses Impedanznetzwerk benötig darüber hinaus keine eigene Versorgungsspannung. Die an die Steueranschlüsse der Schalterelemente gelieferten Steuerspannungen können in einfacher Weise durch weitere Steuerspannungen für weitere, mit den Schalterelementen zu realisierende Steuerfunktionen verknüpft werden.

Wenn als Last ein Schaltnetzteil vorgesehen ist, können vorteilhaft zur Einsparung von Bauteilen die Schalterelemente als Zerhackerschalter des Schaltnetzteils dienen. Die Schalterelemente können dazu während ihrer Leitphasen mit einem zusätzlichen Steuersignal hoher Frequenz getaktet werden. Insbesondere weist die Steuerschaltung für diesen Fall auch eine Einrichtung zur Steuerung der Schalterelemente in Abhängigkeit von der am jeweils Energie in die Last speisenden Energiespeicher anliegenden Spannung sowie von der Energieaufnahme der Last auf. Insbesondere werden die Schalterelemente mit pulsweiten modulierten Signalen gesteuert.

In einer vorteilhaften Weiterbildung werden nach Auftreten einer Störung in einer Wechselspannung des Energieversorgungsnetzes, durch die die Aufladung eines der Energiespeicher gestört ist, insbesondere nach dem Ausfall einer Halbwelle in dieser Wechselspannung, die Zyklen der Leitphasen der Schalterelemente nach jeweils vorbestimmten Zeitabschnitten durch die Steuerschaltung um bestimmte Zeitintervalle gerafft, bis die ursprüngliche Zuordnung der Leitphasen zu der Wechselspannung wieder erreicht ist. Dadurch wird erreicht, daß die Last auch dann kontinuierlich mit Energie versorgt wird, wenn ein Ausfall einer Wechselspannung des Energieversorgungsnetzes oder eine Störung auf dem Energieversorgungsnetz ähnlicher Art oder ähnlicher Wirkung auftritt. Grundsätzlich ist es zwar möglich, durch entsprechend große Dimensionierung der Energiespeicher auch längere Ausfälle einer Wechselspannung zu überbrücken. Die vorstehend angegebene Schaltfolge der Schalterelemente ermöglicht jedoch eine Überbrückung von Störungen der beschriebenen Art bei unveränderter Dimensionierung der Energiespeicher. Dadurch kann die Störsicherheit ohne Vergrößerung der Bauform der Schaltungsanordnung erreicht werden. Durch die genannte Schaltfolge wird die Reihenfolge, in der die Leitphasen der Schalterelemente auftreten, insbesondere bezüglich desjenigen, das zu dem mangelhaft auf geladenen Energiespeicher gehört, durch eine Reihenfolge ersetzt, in der die Schalterelemente zu den Energiespeichern leitend geschaltet werden, in denen wenigstens nahezu korrekt Energie abgespeichert wurde. Erst, wenn in der nächsten Periode der gestörten Wechselspannung der betreffende Energiespeicher wieder aufgeladen ist, wird auch das zugehörige Schalterelement wieder in eine Leitphase gesteuert. Durch die Schaltvorschrift werden im wesentlichen die zeitlichen Abstände der Leitphasen verkürzt, so daß die Abstände, aus denen aus den Energiespeichern Energie für die Last entnommen wird, bis zum Erreichen des normalen Betriebszustands, d.h. der ursprünglichen Zuordnung der Leitphasen zu der Wechselspannung, die in einer Halbwelle in einem Energiespeicher fehlende Energie entsprechend aus den anderen Energiespeichern geliefert wird. Dabei sind im Prinzip auch andere Schaltfolgen möglich; die genannte Schaltfolge schließt sich jedoch an die normale, zyklische Reihenfolge an und ist mit einfachen Steuerungsmitteln aus dieser ableitbar.

Zur Detektion, wann eine Störung in einer Wechselspannung auftritt, kann entweder diese am Eingang der Gleichrichteranordnung oder die Spannungen an den Energiespeichern detektiert werden. Die Schaltfolge für den Störungsfall wird dann beispielsweise ausgelöst, wenn an einem der Energiespeicher eine einen Schwellenwert unterschreitende Aufladung zum Ende einer Halbwelle der zugehörigen Wechselspannung detektiert wird.

Ausführungsbeispiele der Erfindung sind in der Zeichnung dargestellt und werden im nachfolgenden näher beschrieben. Es zeigen
- Fig. 1: ein erstes Ausführungsbeispiel,
- Fig. 2: einige Diagramme zur Betriebsweise der Anordnung nach Fig. 1,
- Fig. 3: ein zweites Ausführungsbeispiel,
- Fig. 4 und 5: Diagramme für verschiedene Betriebsfälle der Anordnung nach Fig. 3,
- Fig. 6: ein drittes Ausführungsbeispiel,
- Fig. 7: ein viertes Ausführungsbeispiel und
- Fig. 8: Diagramme für ein Beispiel einer Betriebsweise zur Störunterdrückung.

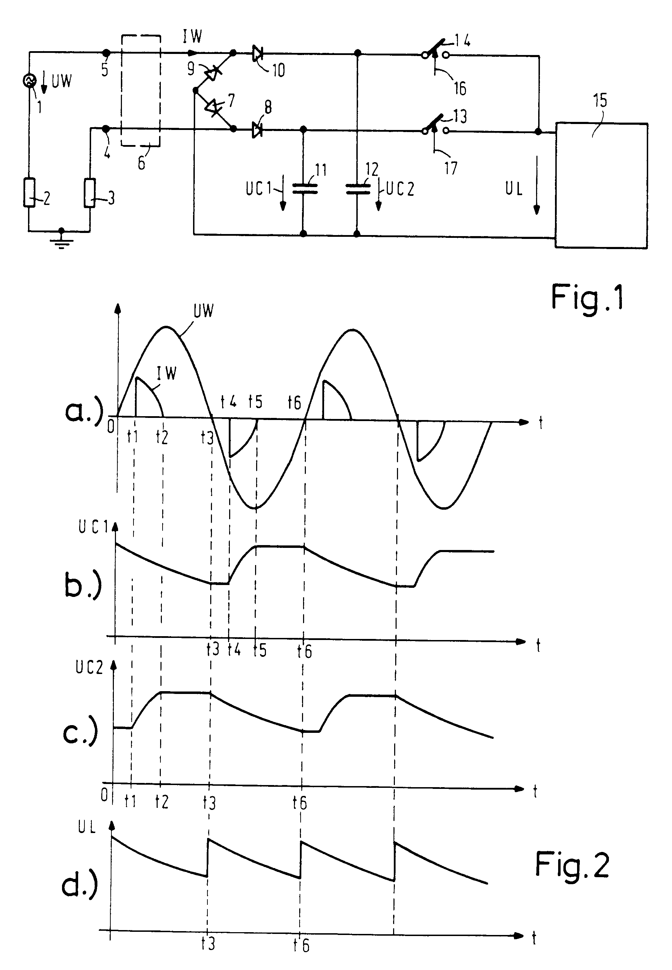

Fig. 1 zeigt als erstes Ausführungsbeispiel eine Schaltungsanordnung zum Speisen einer Last 15 mit Energie aus einem Energieversorgungsnetz mit zwei Polen 4 und 5, das durch sein Ersatzschaltbild gebildet aus einer Spannungsquelle 1, die eine Netzwechselspannung UW abgibt, sowie zwei erdsymmetrisch angeordneten Netzimpedanzen 2 und 3, dargestellt ist. Die Pole 4, 5 des Energieversorgungsnetzes 1 bis 5 sind mit einer im vorliegenden Fall aus vier Dioden 7 bis 10 bestehenden Gleichrichteranordnung verbunden, in der die Dioden 7 und 8 einerseits und die Dioden 9 und 10 andererseits je eine als ersten Zweig einer Graetz-Brücke ausgebildete Gleichrichterstufe darstellen. Dabei ist die erste Gleichrichterstufe aus den Dioden 7, 8 mit dem ersten Pol 4 des Energieversorgungsnetzes 1 bis 5, die zweite Gleichrichterstufe aus den Dioden 9 und 10 mit dem zweiten Pol 5 des Energieversorgungsnetzes 1 bis 5 verbunden.

An jede der Gleichrichterstufen 7, 8 bzw. 9, 10 ist ein Energiespeicher 11 bzw. 12 gemäß einem ergänzenden Zweig der Graetz-Brücke angeschlossen, d.h. der Energiespeicher 11 bzw. 12 verbindet bei der zugehörigen Gleichrichterstufe 7, 8 bzw. 9, 10 die Gleichstromanschlüsse des Zweiges der Graetz-Brücke.

Jeder der Energiespeicher 11, 12 ist über ein Schalterelement 13 bzw. 14 mit der Last 15 verbunden. Wird das zugehörige Schalterelement 13 bzw. 14 in seinen leitenden Zustand überführt, kann Energie aus dem Energiespeicher 11 bzw. 12 in die Last 15 fließen. Durch Sperren des Schalterelements 13 bzw. 14 wird dieser Energiefluß unterbrochen. Die Betätigung der Schalterelemente 13, 14 erfolgt von einer in dieser Figur nicht dargestellten Steuerschaltung über Steueranschlüsse 16 bzw. 17.

Fig. 2 zeigt anhand einiger Strom- bzw. Spannungsverläufe die Funktionsweise der Schaltungsanordnung nach Fig. 1 im Normalbetrieb. In Fig. 2a) ist die Netzwechselspannung UW als Sinusschwingung über der Zeit t aufgetragen, beginnend mit einer positiven Halbwelle. Die Fig. 2b) und 2c) geben die zeitlichen Verläufe der Spannungen UC1 und UC2 am ersten und zweiten Energiespeicher 11 und 12 wieder, die im Beispiel nach Fig. 1 als Kondensatoren ausgebildet sind. Fig. 2d) zeigt den zeitlichen Verlauf der Spannung UL an der Last 15.

Während der positiven Halbwelle der Netzwechselspannung UW befindet sich das erste Schalterelement 13 im leitenden Zustand, d.h. in seiner Leitphase, während das zweite Schalterelement 14 gesperrt ist. Demzufolge ist lediglich der erste Energiespeicher 11 mit der Last 15 verbunden. Solange die Gleichrichterstufen 7, 8 bzw. 9, 10 gesperrt sind, wird der zeitliche Verlauf der Spannung UC1 am ersten Energiespeicher 11 nur durch die Energieabgabe an die Last 15 bestimmt, während die Spannung UC2 am zweiten Energiespeicher 12 konstant ist. Übersteigt zum Zeitpunkt t1 die Netzwechselspannung UW den derzeitigen Wert der Spannung UC2, wird die Diode 10 der zweiten Gleichrichterstufe leitend. Über sie fließt ein Aufladestrom IW aus dem Energieversorgungsnetz 1 bis 5 in den zweiten Energiespeicher 12. Der Stromkreis für den Aufladestrom IW schließt sich über die ebenfalls leitende Diode 7 der ersten Gleichrichterstufe 7, 8. Die Spannung UC2 steigt dann nach Maßgabe der Netzwechselspannung UW an, bis diese nach Überschreiten ihres Scheitels zum Zeitpunkt t2 wieder abfällt. Die Dioden 7, 10 sperren dann, die Spannung UC2 bleibt im folgenden konstant, und der Aufladestrom IW verschwindet.

Beim Nulldurchgang der Netzwechselspannung UW zum Zeitpunkt t3 werden die Schalterelemente 13, 14 von der Steuerschaltung umgeschaltet. Während der nun folgenden negativen Halbwelle der Netzwechselspannung UW nimmt das zweite Schalterelement 14 seine Leitphase an, während das erste Schalterelement 13 in den gesperrten Zustand überführt wird. Die Speisung der Last 15 erfolgt nun aus dem zweiten Energiespeicher 12. Demzufolge beginnt die Spannung UC2 vom Zeitpunkt t3 an abzusinken, während die Spannung UC1 am ersten Energiespeicher 11 zunächst konstant bleibt, da dieser sowohl von der Last 15 als auch vom Energieversorgungsnetz 1 bis 5 noch abgetrennt ist.

Übersteigt zum Zeitpunkt t4 der Betrag der Netzwechselspannung UW, d.h. der Augenblickswert der Spannung am ersten Pol 4 des Energieversorgungsnetzes 1 bis 5, den derzeitigen Wert der Spannung UC1 am ersten Energiespeicher 11, beginnt dessen Aufladung über die Diode 8 der ersten Gleichrichterstufe 7, 8 mit entsprechender Rückführung des Aufladestromes über die Diode 9 der zweiten Gleichrichterstufe 9, 10. Der jetzt negative Aufladestrom IW fließt, bis zum Zeitpunkt t5 die Netzwechselspannung UW ihren Scheitelpunkt überschreitet und die Dioden 8, 9 damit wieder in den gesperrten Zustand übergehen. Bis zum erneuten Nulldurchgang der Netzwechselspannung UW zum Zeitpunkt t6 bleibt daher die Spannung UC1 konstant, während die Spannung UC2 kontinuierlich absinkt.

Nach dem Zeitpunkt t6 wiederholen sich entsprechend die beschriebenen Vorgänge zu den Zeitpunkten t1 bis t5.

Bei der beschriebenen Betriebsweise (Normalbetrieb) sind somit für jeden Energiespeicher 11 bzw. 12 die Leitphasen der zugeordneten Gleichrichterstufe 7, 8 bzw. 9, 10 einerseits und die Leitphasen der angeschlossenen Schalterelemente 13 bzw. 14 jeweils zeitlich getrennt, so daß die Energiespeicher jeweils entweder nur mit dem Energieversorgungsnetz 1 bis 5 oder nur mit der Last 15 verbunden sind. Eine durchgehende Verbindung zwischen dem Energieversorgungsnetz 1 bis 5 und der Last 15 wird dadurch vermieden, so daß Störungen auf diesem Wege nicht übertragen werden können. Wie jedoch Fig. 2d) zeigt, ist jeweils einer der Energiespeicher 11 bzw. 12 mit der Last 15 verbunden, so daß diese durchgehend mit Energie gespeist wird. Entsprechend nimmt die Spannung UL an der Last 15 stets einen von Null verschiedenen Wert an. Das Maß, um das die Spannungen UC1 und UC2 und damit die Spannung UL in den zugehörigen Leitphasen der Schalterelemente 13, 14 absinken, ist abhängig vom Energieverbrauch der Last 15. Nimmt dieser Energieverbrauch und damit die Stromentnahme aus den Energiespeichern 11, 12 zu, sinkt die Spannung UL während der einzelnen Halbwellen der Netzwechselspannung UW stärker ab. Die Energiespeicher 11, 12 werden bevorzugt derart dimensioniert, daß die Spannung UL bei der höchstmöglichen Strom- und damit Energieaufnahme der Last 15 zum Zeitpunkt der Nulldurchgänge der Netzwechselspannung UW und damit des Umschaltens zwischen den Leitphasen der Schalterelemente noch gerade den als Minimum zulässigen Spannungswert aufweist.

Bei der Betriebsweise nach Fig. 2 bleibt das erste Schalterelement 13 außerhalb der Leitphase der Dioden 8 und 9 noch in den Zeiträumen zwischen den Zeitpunkten t3 und t4 sowie t5 und t6 nicht leitend. Diese Zeiträume können grundsätzlich entweder von den Gleichrichterstufen 7, 8 bzw. 9, 10 oder von den Schalterelementen 13 bzw. 14 zur Ausdehnung ihrer Leitphasen genutzt werden. Insbesondere wird bei einer stärkeren Entladung der Energiespeicher 11 bzw. 12 durch die Last 15 und dem damit verbundenen, stärkeren Absinken der Spannung UC1 bzw. entsprechend UC2 der Zeitraum zwischen den Zeitpunkten t3 und t4 zumindest teilweise für die Aufladung des Energiespeichers 11 bzw. entsprechend 12 herangezogen werden. Der Zeitraum zwischen den Zeitpunkten t5 und t6 könnte dann der Ausdehnung der Leitphase des Schalterelementes 13 dienen; entsprechendes gilt für die Leitphase des zweiten Schalterelementes 14. In den Zeiträumen, in denen beide Schalterelemente 13, 14 leitend sind, findet jedoch ein Spannungsausgleich zwischen den beiden Energiespeichern 11, 12 statt, der mit Energieverlusten verbunden ist. Bezüglich dieser Energieverluste werden daher vorteilhaft die Leitphasen der Schalterelemente 13, 14 nicht überlappend aneinandergrenzen.

In Fig. 1 ist weiterhin gestrichelt ein Hochfrequenzfilter 6 eingezeichnet, das wahlweise in die Zuleitungen von den Polen 4 und 5 des Energieversorgungsnetzes zur Gleichrichteranordnung 7 bis 10 eingefügt werden kann. Damit können ggf. besonders hochfrequente Störungen unterdrückt werden, die von Sperrschicht- oder parasitären Kapazitäten der Dioden 7 bis 10 unter Umständen noch durchgelassen werden. Ein derartiges Hochfrequenzfilter wird jedoch nur dann vorgesehen, wenn sehr hochfrequente Störungsanteile größerer Amplitude vorliegen.

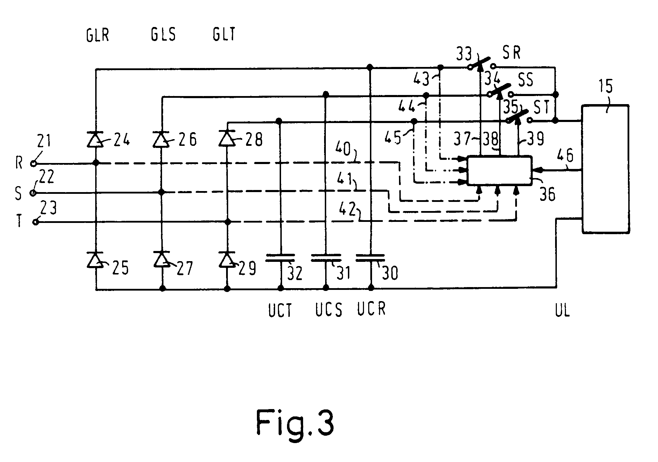

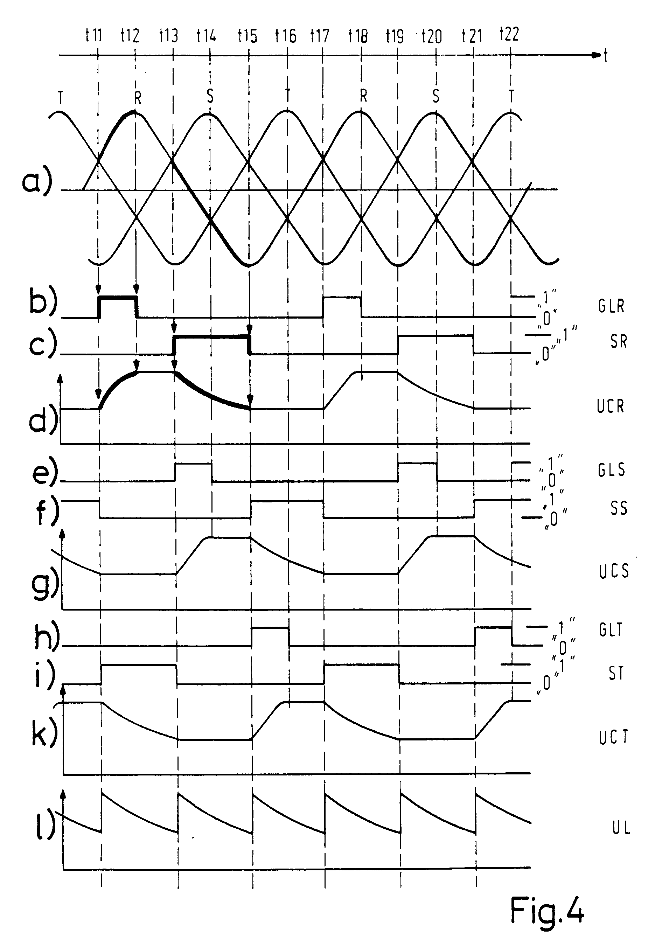

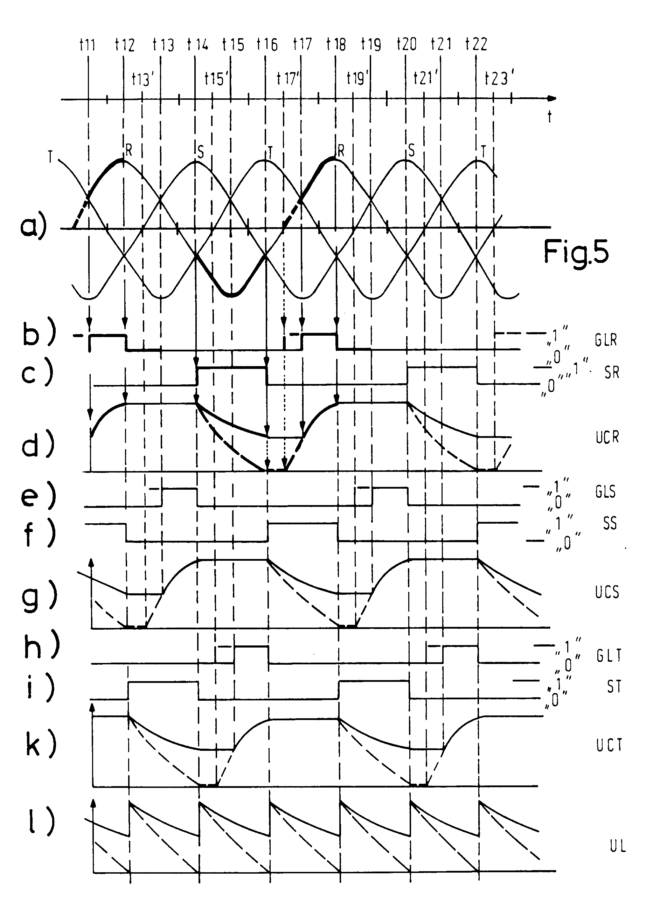

Fig. 3 zeigt ein Ausführungsbeispiel einer erfindungsgemäßen Schaltungsanordnung für den Betrieb mit einem dreipoligen Energieversorgungsnetz, das an seinen drei Polen 21, 22, 23 die mit R, S und T bezeichneten Wechselspannungen eines Drehstromsystems führt. In Fig. 4 ist ein erster und in Fig. 5 sind zwei weitere Betriebsfälle der Anordnung nach Fig. 3 dargestellt.

Die Gleichrichteranordnung aus Fig. 3 weist drei Gleichrichterstufen mit je zwei Dioden 24, 25 bzw. 26, 27 bzw. 28, 29 auf. Jede der Gleichrichterstufen 24, 25 bzw. 26, 27 bzw. 28, 29 ist mit einem von drei als Kondensatoren ausgebildeten Energiespeichern 30 bzw. 31 bzw. 32 in der gleichen Art wie nach Fig. 1 verbunden. Über je ein Schalterelement 33 bzw. 34 bzw. 35 sind die Energiespeicher 30 bis 32 mit der Last 15 verbunden. Die an den Energiespeichern 30 bzw. 31 bzw. 32 auftretenden Spannungen sind mit UCT bzw. UCS bzw. UCR, die Spannung an der Last ist wieder mit UL bezeichnet. GLR bzw. GLS bzw. GLT einerseits und SR bzw. SS bzw. ST sind Zustandsvariablen zur Verdeutlichung der leitenden und der gesperrten Zustände der Gleichrichterstufen, insbesondere der Dioden 24, 26, 28, sowie zur Darstellung der Leitphasen der Schalterelemente 33, 34, 35. Der letzte Buchstabe dieser Bezeichnungen weist jeweils auf die zugehörige Wechselspannung R, S, T des Drehstromsystems hin.

In Fig. 3 ist weiterhin blockschematisch eine Steuerschaltung 36 dargestellt, die über Steueranschlüsse 37, 38, 39 die Schalterelemente 33 bzw. 34 bzw. 35 steuert. Der Steuerschaltung werden zur korrekten zeitlichen Steuerung der Leitphasen der Schalterelemente 33 bis 35 die Wechselspannungen R, S, T von den Polen 21 bis 23 des Energieversorgungsnetzes sowie die Spannungen UCT, UCS, UCR an den Energiespeichern 30 bis 32 zugeleitet. Die entsprechenden Leitungen sind gestrichelt bzw. strichpunktiert ausgeführt und mit den Bezugszeichen 40, 41, 42 sowie 43, 44, 45 versehen.

Im Diagramm nach Fig. 4 sind alle Zeitverläufe der dargestellten Spannungen und Zustandsvariablen über einer gemeinsamen Zeitachse nach der Zeit t aufgetragen. Fig. 4a) zeigt die in üblicher Weise um jeweils 120° gegeneinander phasenverschobenen Wechselspannungen R, S und T an den Polen 21 bzw. 22 bzw. 23 des Energieversorgungsnetzes. Diese Wechselspannungen werden nicht nur über die Gleichrichterstufen 24 bis 29 zum Aufladen der Energiespeicher 30 bis 32 eingesetzt, sondern zusätzlich über die Leitungen 40 bis 42 der Steuerschaltung 36 zugeführt. Darin wird, beispielsweise mit Hilfe an sich bekannter Komparatorschaltungen, detektiert, zu welchen Zeitpunkten die Augenblickswerte der Wechselspannungen R, S, T paarweise aneinander entsprechen oder die paarweise Differenz dieser Spannungen ihr Vorzeichen wechselt. Danach werden über die Steueranschlüsse 37 bis 39 die Leitphasen der Schalterelemente 33 bis 35 ausgelöst. Im dargestellten Beispiel wird gemäß Fig. 4c) die Leitphase des ersten Schalterelements 33 begonnen, wenn der Wert der Wechselspannung R am ersten Pol 21 den Wert der Wechselspannung S am zweiten Pol 22 unterschreitet. Diese Leitphase erstreckt sich über ein Drittel der Periodendauer der Wechselspannungen R, S, T; im Diagramm nach Fig. 4 ist dies der Zeitraum zwischen den Zeitpunkten t13 und t15. In Fig. 4c) nimmt die Zustandsvariable SR in diesem Zeitraum entsprechend den Wert "1" an. Zum Zeitpunkt t15 wird von der Steuerschaltung 36 der Vorzeichenwechsel der Differenz der Wechselspannungen S und T detektiert, entsprechend wird für das zweite Schalterelement 34 eine Leitphase ausgelöst, die bis zum Zeitpunkt t17 andauert; in Fig. 4f) ist dies durch die Zustandsvariable SS wiedergegeben. Entsprechend wird im Zeitpunkt t17 anhand des Vergleichs der Wechselspannungen T und R die in Fig. 4i) durch die Zustandsvariable ST dargestellte Leitphase des dritten Schalterelements 35 ausgelöst. Insgesamt werden somit die Leitphasen zu jeweils einem Zeitpunkt begonnen, zu dem die Wechselspannung am zugehörigen Pol kleiner wird als wenigstens eine der übrigen Wechselspannungen, und sie erstrecken sich - nicht überlappend aneinandergrenzend - über einen der Anzahl der Pole des Energieversorgungsnetzes entsprechenden Teil der Periodendauer der Wechselspannungen R, S, T.

Auf diese Weise wird außer den zu Fig. 1 beschriebenen Vorteilen auch eine einfache Steuerung der Leitphasen erreicht.

Entsprechend den Leitphasen der Schalterelemente 33, 34, werden die Energiespeicher 30, 31, 32 mit der Last 15 verbunden, und die an ihnen anliegenden Spannungen UCR, UCS und UCT sinken entsprechend ihrer Entladung, d.h. der Energieübergabe an die Last, ab. In den Diagrammen nach Fig. 4d), g) und k) sind diese Verläufe in den Zeiträumen t13 bis t15, t15 bis t17 bzw. t17 bis t19 beispielhaft dargestellt und wiederholen sich mit der Periode der Wechselspannungen R, S, T. Für den Zeitraum t13 bis t15 sind die Zeitverläufe mit dicker Vollinie hervorgehoben.

Die Aufladung der Energiespeicher 30, 31, 32 erfolgt im vorliegenden Beispiel während des Zeitraums, in dem die Wechselspannung R bzw. S bzw. T am zugehörigen Pol 21 bzw. 22 bzw. 23 des Energieversorgungsnetzes die übrigen Wechselspannungen übersteigt. Für die Wechselspannung R am ersten Pol 21 ist dies beispielsweise das Zeitintervall t11 bis t12, in dem die Diode 24 leitend wird - dargestellt durch einen Übergang der Zustandsvariablen GLR in den Zustand "1" - und in dem die Spannung UCR der Wechselspannung R folgt. Nach Überschreiten des Scheitelwerts der Wechselspannung R zum Zeitpunkt t12 bleibt der Wert der Spannung UCR am ersten Energiespeicher 30 zunächst konstant, da die erste Gleichrichterstufe, insbesondere Diode 24, sperrt - entsprechend nimmt GLR den Wert "0" an - und die Leitphase des ersten Schalterelements 33 noch nicht begonnen hat. Entsprechend ist in diesem Zeitintervall die Zustandsvariable SR noch auf dem Wert "0". Die Zusammenhänge der Spannungen und Zustandsvariablen während der Aufladung der Energiespeicher sind am Beispiel für die Wechselspannung R ebenfalls mit dicken Vollinien hervorgehoben; sie wiederholen sich entsprechend in den Diagrammen nach Fig. 4e), g), h) und k) für die Spannungen UCS und UCT sowie die Zustandsvariablen GLS und GLT.

Die Spannung UL an der Last 15 ist in Fig. 41) dargestellt; sie setzt sich entsprechend Fig. 2 aus den Spannungsverläufen UCR, UCS und UCT während der jeweiligen Leitphasen der Schalterelemente 33, 34, 35 zusammen.

Fig. 5 zeigt zwei Abwandlungen des Betriebszustands nach Fig. 4; demgemäß sind Spannungen und Zustandsvariable in gleicher Weise und Reihenfolge aufgetragen. Die Leitphasen der einzelnen Schalterelemente 33, 34, 35 werden jetzt erst zu einem Zeitpunkt ausgelöst, an dem die zugehörige Wechselspannung R bzw. S bzw. T jeweils kleiner wird als alle anderen Wechselspannungen. Am Beispiel der Wechselspannung R ist dies für den Zeitraum t14 bis t16 dargestellt und durch eine dicke Vollinie hervorgehoben. Demgegenüber bleiben die Zeitintervalle für die Aufladung der Energiespeicher 30, 31, 32 unverändert, also für die Wechselspannung R zwischen den Zeitpunkten t11 und t12, t17 und t18, usw.. Gegenüber dem Betriebszustand nach Fig. 4 verringert sich somit der zeitliche Abstand zwischen einer Leitphase eines Schalterelements 33 bzw. 34 bzw. 35 und dem Zeitintervall der Aufladung des zugehörigen Energiespeichers 30 bzw. 31 bzw. 32, während sich im gleichen Maße der zeitliche Abstand zwischen dem Zeitintervall der Aufladung und der nachfolgenden Leitphase des zugehörigen Schalterelements vergrößert. Im übrigen treten jedoch wieder die gleichen Vorgänge und damit Kurvenverläufe im Diagramm auf.

Insbesondere bei einer Ausbildung der Last 15 als Schaltnetzteil, das auch mit sehr niedriger Spannung UL noch gespeist werden kann, kann die Kapazität der Energiespeicher 30, 31, 32 so gering dimensioniert werden, daß im Falle der höchstmöglichen Energieaufnahme der Last 15 die Spannung UL am Ende der Leitphasen jedes der Schalterelemente 33, 34, 35 weitgehend oder wenigstens nahezu auf den Wert Null absinkt. Dies bedingt eine Anpassung des Betriebs der im Schaltnetzteil eingesetzten Zerhackerschalter an diese niedrigen Spannungen, insbesondere durch eine Pulsbreitenmodulation der sie steuernden Signale.

Der sich dann ergebende Betriebszustand ist in Fig. 5 mit gestrichelten Linien eingetragen. Die Leitphasen der Schalterelemente 33, 34, 35 bleiben in ihrer zeitlichen Lage unverändert; lediglich die Spannungen UCR, UCS und UCT und entsprechend die Spannung UL sind bis auf den Wert Null absinkend eingetragen. Dadurch erfolgt auch ein früheres Einsetzen des Zeitintervalls der Aufladung der Energiespeicher 30, 31, 32, und zwar zu den Zeitpunkten t13′, t15′, t17′, t19′, t21′ und t23′ statt wie bisher zu den Zeitpunkten t13, t15, t17, t19, t21 bzw. t23. Der zu diesen früheren Zeitpunkten hin verschobene Beginn der Leitphasen der Gleichrichterstufen ist durch die gestrichelten Linien in den Diagrammen nach Fig. 5b), e) bzw. h) für die Zustandsvariablen GLR, GLS bzw. GLT eingetragen.

Es zeigt sich, daß durch diese Dimensionierung der Gesamtwert der Kapazitäten der als Kondensatoren ausgebildeten Energiespeicher 30, 31, 32 um etwa den Faktor 5 geringer gewählt werden kann als die üblicherweise im Zusammenhang mit Netzgleichrichtern verwendeten Kapazitätswerte für Speicherkondensatoren. Trotzdem wird durch das die Last 15 bildende Schaltnetzteil kein sogenannter Netzbrumm übertragen. Vorteilhaft bei diesem Betriebszustand ist auch die Verlängerung der Zeitintervalle der Aufladung der Energiespeicher 30, 31, 32, wodurch die Oberwellen der den Polen 21, 22, 23 des Energieversorgungsnetzes entnommenen Aufladeströme in ihren Amplituden verringert werden. Dies trägt ebenfalls zur verringerten Einstreuung von Störungen durch die Last 15 bei.

Zur Einsparung gesonderter Zerhackerschalter in der als Schaltnetzteil ausgebildeten Last 15 können vorzugsweise die Schalterelemente 33, 34, 35 von der Steuerschaltung 36 über die Steueranschlüsse 37, 38, 39 während ihrer jeweiligen Leitphasen entsprechend dem Zerhackerschalter gesteuert, d.h. insbesondere mit entsprechend der Energieaufnahme der Last pulsbreitenmodulierten Signalen getaktet werden. Das dazu nötige Regelsignal wird der Steuerschaltung 36 über eine Laststromregelleitung 46 von der Last 15 zugeführt. Die Steuerschaltung 36 enthält beispielsweise einen Taktoszillator, dessen Taktsignal durch das Regelsignal pulsbreitenmoduliert und entsprechend den Leitphasen auf die Steueranschlüsse 37, 38, 39 gegeben wird.

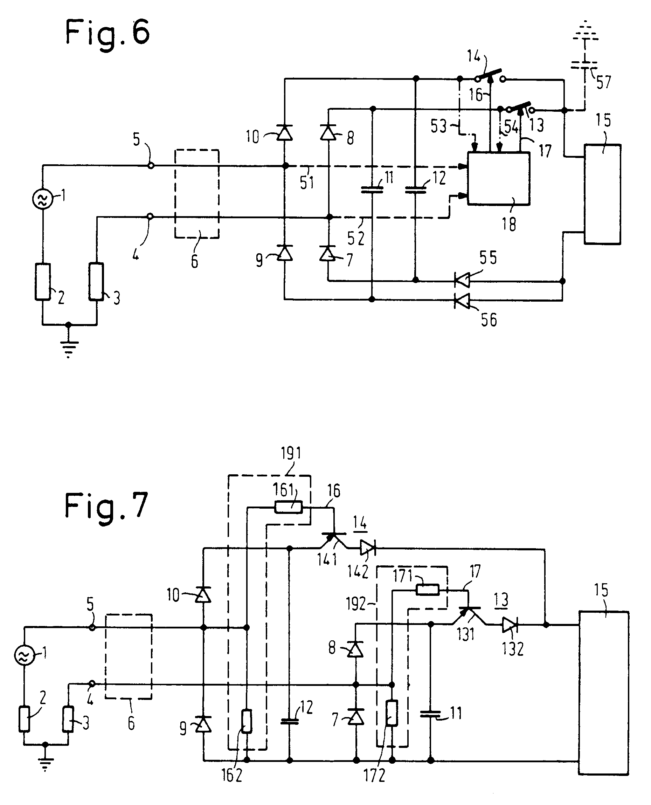

Fig. 6 zeigt eine Abwandlung der Anordnung nach Fig. 1, in der übereinstimmende Bestandteile wieder mit denselben Bezugszeichen versehen sind. Zusätzlich ist eine Steuerschaltung 18 dargestellt, die für das zweipolige Energieversorgungsnetz dieses Ausführungsbeispiels die entsprechenden Funktionen der Steuerschaltung 36 aus Fig. 3 wahrnimmt. Dieser Steuerschaltung werden - ebenfalls entsprechend Fig. 3 - über Leitungen 51, 52 die Spannungen an den Polen 4, 5 des Energieversorgungsnetzes 1 bis 5 und über Leitungen 53, 54 die Spannungen UC1 und UC2 an den Energiespeichern 11, 12 zugeführt.

Werden die Schalterelemente 13, 14 als Transistoren ausgebildet, ist es zweckmäßig, in jeden Energieübertragungskreis zwischen je einem der Energiespeicher 11 bzw. 12 und der Last 15, der über die Schalterelemente 13 bzw. 14 geschlossen wird, je eine Diode einzufügen, durch die während der Leitphase eines der Schalterelemente 13 bzw. 14 die dann bei unterschiedlicher Aufladung der Energiespeicher 11 bzw. 12 am jeweils anderen Schalterelement anliegende Rückwärtsspannung aufgenommen wird. Diese Dioden können unmittelbar mit den Schalterelementen 13, 14 in Reihe angeordnet werden.

In Fig. 6 sind die Dioden - mit Bezugszeichen 55 und 56 versehen - nicht unmittelbar in Reihe mit den Schalterelementen 13, 14, sondern, verbunden mit einem zweiten, von den Schalterelementen 13, 14 abgewandten Anschluß der Last 15, in die Energieübertragungskreise zwischen den Energiespeichern 11, 12 und der Last 15 eingefügt. Zusätzlich sind die den Dioden 7, 9 der Gleichrichteranordnung zugewandten Verbindungen zwischen den Gleichrichterstufen 7, 8 bzw. 9, 10 und den zugehörigen Energiespeichern 11 bzw. 12 zyklisch vertauscht. Bei einem zweipoligen Energieversorgungsnetz ist diese Vertauschung sehr einfach dahingehend vorzunehmen, daß die Diode 7 der Gleichrichteranordnung statt an den ersten Energiespeicher 11 jetzt an den zweiten Energiespeicher 12, die Diode 9 dagegen statt an den zweiten Energiespeicher 12 jetzt an den ersten Energiespeicher 11 gelegt wird. Bei mehrphasigen Energieversorgungsnetzen muß eine zyklische Vertauschung dieser Anschlüsse gemäß der Aufeinanderfolge der Leitphasen der zugeordneten Schalterelemente vorgenommen werden.

Durch diese Maßnahme wird nicht nur der Energieaustausch zwischen den Energiespeichern 11 und 12 unterbunden; vielmehr tragen die Dioden 55, 56 in dieser Anordnung zu einer starken Reduzierung sogenannter Gleichtaktstörströme bei. Diese Gleichtaktstörströme werden besonders dann hervorgerufen, wenn - wie zu Fig. 3 erläutert - die Schalterelemente 13, 14 gleichzeitig als Zerhackerschalter für die Last 15 getaktet werden. Am Verbindungspunkt zwischen den Schalterelementen 13, 14 und der Last 15 entstehen dann sehr steilflankige Sprünge des elektrischen Potentials. Diese werden über eine in der Schaltungsanordnung stets vorhandene parasitäre Kapazität 57 gegen das Erdpotential abgeleitet und über den Erdanschluß des Energieversorgungsnetzes 1 bis 5 in dieses eingestreut. Während der Leitphasen der Gleichrichterstufen, in denen die Dioden 7 bzw. 9 abwechselnd leitend sind, würden sich über diese und die Netzimpedanzen 2 bzw. 3 sowie die Last 15 Stromkreise für die Gleichtaktstörströme schließen. Die Dioden 55, 56 unterbrechen diese Stromkreise für die Gleichtaktstörströme, da jeweils diejenige der beiden Dioden 55, 56 gesperrt, d.h. wegen des gesperrten zugehörigen Schalterelements 13 bzw. 14 stromlos ist, die mit einer gerade leitenden Diode 7 bzw. 9 der Gleichrichteranordnung 7 bis 10 verbunden ist.

Fig. 7 zeigt eine Weiterbildung der Schaltungsanordnung nach Fig. 1 mit einer besonders einfachen Ausführungsform einer Steuerschaltung. Diese gliedert sich in je einen Teil 191 bzw. 192 für jedes der Schaltelemente 14 bzw. 13. Zu jedem dieser Schalterelemente 13, 14 umfaßt die Steuerschaltung 191, 192 ein Impedanznetzwerk aus je zwei Widerständen 161, 162 bzw. 171, 172. Jeder Teil 191 bzw. 192 der Steuerschaltung, d.h. jedes Impedanznetzwerk ist mit einer Anzapfung - im vorliegenden Beispiel der Verbindung zwischen den Widerständen 161 und 162 bzw. 171 und 172 - mit dem zugehörigen Pol 4 bzw. 5 des Energieversorgungsnetzes verbunden, während es mit einem ersten Endanschluß - über den Widerstand 161 bzw. 171 - an je einen der Steueranschlüsse 16 bzw. 17 der Schalterelemente 13 bzw. 14 angeschlossen ist. Die Teile 191, 192 der Steuerschaltung sind je mit einem zweiten Endanschluß - über die Widerstände 162 bzw. 172 - mit dem vom Schalterelement abgewandten Anschluß des zugehörigen Energiespeichers 11 bzw. 12 verknüpft. Die Schalterelemente 13 bzw. 14 sind im vorliegenden Beispiel mit je einem PNP-Transistor 131 bzw. 141 ausgeführt. Die Transistoren 131, 141 sind je mit ihren Emitteranschlüssen mit dem zugehörigen Energiespeicher 11 bzw. 12, mit ihren Basisanschlüssen mit den Steueranschlüssen 16 bzw. 17 und mit ihren Kollektoranschlüssen mit der Last 15 verbunden. In Reihe mit jedem der Kollektoranschlüsse ist ferner je eine Diode 132, 142 zur Aufnahme der Rückwärtsspannung bei unterschiedlich aufgeladenen Energiespeichern 11 bzw. 12 geschaltet. Die Dioden 132, 142 können in einer Abwandlung der Anordnung entsprechend den Dioden 55 bzw. 56 gemäß Fig. 6 angebracht werden. Beim Auftrennen der in Fig. 7 gemeinsamen Verbindung der Dioden 7, 9 der Energiespeicher 11, 12 und der Widerstände 162, 172 bleiben letztere mit dem zugeordneten Energiespeicher 11 bzw. 12 verbunden.

Die Anordnung nach Fig. 7 ermöglicht in einfacher Weise eine Steuerung der Schalterelemente 13 bzw. 14 in Abhängigkeit von den Leitphasen der Gleichrichterstufen und darin insbesondere der Dioden 8 bzw. 10. Die PNP-Transistoren 131 bzw. 141 können nur leitend werden, wenn an ihren Basisanschlüssen eine gegenüber dem Emitteranschluß negative Spannung (Diodenflußspannung von etwa 0,7 V) anliegt; die zugehörige Diode 8 bzw. 10 der entsprechenden Gleichrichterstufe muß also mit mindestens dieser Spannung in Sperrichtung gepolt und damit nicht leitend sein. Die Diodenflußspannung bzw. Basis-Emitter-Flußspannung der PNP-Transistoren 131 bzw. 141 liefert somit einen "Sicherheitsabstand" zwischen der Leitphase der Gleichrichterstufe und der Leitphase der zugehörigen Schalterelemente. Diese Leitphasen können sich somit zeitlich nicht überschneiden. Die Widerstände 161, 162, 171, 172 werden zum Verringern der durch sie auftretenden Verluste und zur Verringerung einer möglichen Kopplung von Störungen über die von ihnen geschaffenen Stromwege möglichst hochohmig ausgeführt. Um trotzdem an den Steueranschlüssen 16, 17 hinreichend hohe Basisströme zu erzielen, d.h. Basisströme, durch die die PNP-Transistoren 131, 141 einwandfrei in den leitenden Zustand gesteuert werden können, werden Transistoren möglichst hoher Stromverstärkung eingesetzt. Vorzugsweise können die Schalterelemente 13, 14 auch mit Darlingtontransistoren ausgeführt werden.

Die Anordnung der Steuerschaltung 191, 192 nach Fig. 7 hat zusätzlich den Vorteil, daß die von ihr an den Steueranschlüssen 16, 17 gelieferten Steuersignale für die Schalterelemente 13, 14 in einfacher Weise mit weiteren Steuersignalen, z.B. zum Takten der Schalterelemente 13, 14, durch Einfügen entsprechender Verknüpfungsgatter in die Steueranschlüsse 16, 17 kombiniert werden können.

Außer zum Takten der Schalterelemente 13, 14 können derartige zusätzliche Steuersignale bevorzugt auch dazu eingesetzt werden, ohne Spannungsausfall an der Last 15 Störungen in einer Wechselspannung des Energieversorgungsnetzes, durch die die Aufladung eines der Energiespeicher gestört ist, und insbesondere den Ausfall einer Halbwelle dieser Wechselspannung zu überbrücken. Dazu werden die Zyklen der Leitphasen der Schalterelemente 13, 14 nach jeweils vorbestimmten Zeitabschnitten um bestimmte Zeitintervalle gerafft, bis die ursprüngliche Zuordnung der Leitphasen zu der Wechselspannung wieder erreicht ist. Im Beispiel der Fig. 7 werden dazu in einfacher Weise für einen bestimmten Zeitraum die Steuersignale an den Steueranschlüssen 16, 17 für die Schalterelemente 13, 14 invertiert. Die Maßnahme läßt sich jedoch entsprechend für eine Schaltungsanordnung mit einem mehrpoligen Energieversorgungsnetz, beispielsweise nach Fig. 3 einsetzen. Dann wird eine zyklische Vertauschung der Zuordnung der Steuersignale zu den Schalterelementen 33, 34, 35 vorgenommen. Diese zyklische Vertauschung durchläuft bis zum Erreichen der ursprünglichen Zuordnung der Leitphasen zu der Wechselspannung im allgemeinen mehrere Stufen.

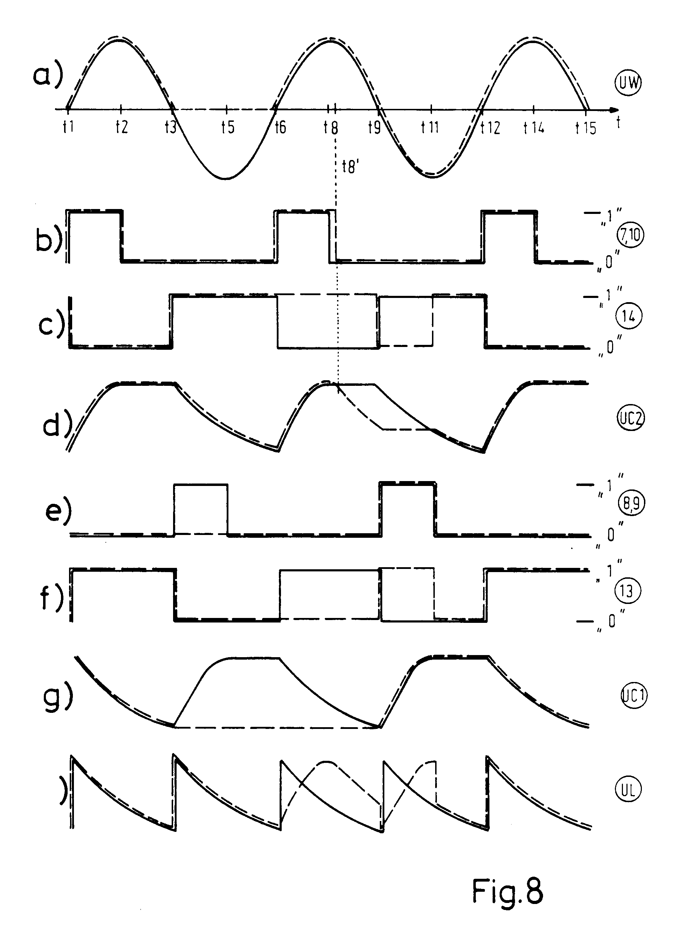

Am einfachen Beispiel eines zweipoligen Energieversorgungsnetzes werden die Vorgänge nachfolgend im einzelnen beschrieben. In Fig. 8 sind dazu ähnlich Fig. 2 die zeitlichen Verläufe einiger Spannungen und Zustandsvariablen einer Schaltungsanordnung gemäß Fig. 1 oder Fig. 7 aufgetragen, wobei wieder dieselben Bezugszeichen verwendet werden. Zusätzlich zu den aus Fig. 2 bekannten Spannungen finden sich in den Diagrammen nach Fig. 8b), c), e) und f) Zustandsvariablen in einer zu den Zustandsvariablen der Fig. 4 und 5 entsprechenden Auftragung für die leitenden bzw. gesperrten Zustände der Dioden 7, 10, des zweiten Schalterelementes 14, der Diode 8, 9 bzw. des ersten Schalterelements 13. Dabei ist der Normalbetrieb nach Fig. 2 in Vollinien aufgetragen, während der noch zu beschreibende Betrieb im Störfall mit gestrichelten Linien wiedergegeben ist. Im Gegensatz zu dem Betriebsfall nach Fig. 2 ist jedoch für Fig. 8 ein Betriebsfall angenommen worden, in dem die Energiespeicher 11 bzw. 12 während der Leitphasen der zugehörigen Schalterelemente 13 bzw. 14 vollkommen entladen werden. Die Leitphasen der Gleichrichterstufen, d.h. der Dioden 7, 10 bzw. 8, 9 gemäß Fig. 8b) bzw. e) beginnen dann bereits beim Nulldurchgang der Netzwechselspannung UW und enden in deren nachfolgendem Scheitelpunkt, während die Leitphasen der Schalterelemente 13 bzw. 14 - aufgetragen in Fig. 8f) bzw. c) - unverändert jeweils eine Halbwelle der Netzwechselspannung UW betragen. Entsprechend dem Absinken der Spannungen UC1 und UC2 - dargestellt in Fig. 8g) und d) - sinkt auch die Spannung UL an der Last 15 - dargestellt in Fig. 8h) - jeweils bis auf Null ab. Aufgrund des Zusammenfallens der Anfänge der Leitphasen der Gleichrichteranordnung 7 bis 10 mit den Nulldurchgängen der Netzwechselspannung UW werden die Zeitpunkte t4, t7, t10, t13, usw. mit den Zeitpunkten t3, t6, t9, t12, usw. identisch; die erstgenannten Benennungen sind daher im Diagramm nach Fig. 8a) gegenüber Fig. 2a) weggelassen.

Als Störfall gemäß Fig. 8 ist der völlige Ausfall der ersten dargestellten negativen Halbwelle der Netzwechselspannung UW angenommen; diese Spannung verschwindet somit im Zeitraum zwischen den Zeitabschnitten t3 und t6. Bis zum Zeitpunkt t3 herrscht daher noch Normalbetrieb vor. Im Zeitraum zwischen den Zeitpunkten t3 und t5 wird jedoch der bis zum Zeitpunkt t3 entladene erste Energiespeicher 11 nicht wieder aufgeladen; die Spannung UC1 behält demzufolge den zum Zeitpunkt t3 erreichten Wert Null bei. Die zugeordnete Leitphase der ersten Gleichrichterstufe, insbesondere der Diode 8, fällt aus; in Fig. 8e) bleibt die zugehörige Zustandsvariable auf dem Zustand "0". Auf die Speisung der Last 15 hat die Störung bisher noch keinen Einfluß, da bis zum Zeitpunkt t6 zunächst der zweite Energiespeicher 12 Energie liefert und die Spannung UC2 wie im Normalbetrieb auf den Wert Null absinkt.

Die Steuerschaltung ist nun derart ausgebildet, daß durch sie beim Umschalten der Leitphasen der Schalterelemente 13, 14, d.h. beim Einschalten der sich nun im Normalbetrieb anschließenden Leitphase des ersten Schalterelements 13, erkannt wird, ob eine korrekte Aufladung des ersten Energiespeichers 11 vorliegt. Ist diese Aufladung im gestörten Betriebsfall nicht erfolgt, schaltet die Steuerschaltung selbsttätig im Zyklus der Leitphasen um ein bestimmtes Zeitintervall weiter. Beim Beispiel nach Fig. 8 wird im normalen Schaltzyklus der Schalterelemente 13, 14 eine halbe Periodendauer der Netzwechselspannung UW übersprungen, der Zyklus der Leitphasen also um dieses Zeitintervall gerafft. Auf das Ende der Leitphase des zweiten Schalterelements 14 am Zeitpunkt t6 schließt sich somit nicht, wie im Normalbetrieb, ein bis zum Zeitpunkt t9 andauernder gesperrter Zustand an, sondern derjenige Zustand, der vom Zeitpunkt t6 aus gesehen im Normalbetrieb noch um das Zeitintervall in der Zukunft liegen würde, um das im jetzt vorliegenden Störungsfall die Zyklen gerafft werden. Das ist die im Normalbetrieb zum Zeitpunkt t9 beginnende nächste Leitphase des zweiten Schalterelements 14. Diese Leitphase schließt sich nun, beginnend mit dem Zeitpunkt t6 an; entsprechend wird im Zustand des ersten Schalterelements 13 ebenfalls der Zyklus der Leitphasen um den Zeitraum zwischen den Zeitpunkten t6 bis t9 gerafft und an den Zeitpunkt t6 der zeitliche Verlauf der Zustände angeschlossen, wie er im Normalbetrieb vom Zeitpunkt t9 an eintreten würde.

Gemäß den veränderten Zuständen der Schalterelemente 13, 14 erfolgt die Speisung der Last 15 im Zeitintervall zwischen den Zeitpunkten t6 und t9 weiterhin über das zweite Schalterelement 14 und damit aus dem zweiten Energiespeicher 12, während der erste Energiespeicher 11 zunächst von der Last 15 abgetrennt bleibt. Dabei wird gleichzeitig im Zeitintervall zwischen den Zeitpunkten t6 und t8 der zweite Energiespeicher 12 aus dem Energieversorgungsnetz aufgeladen. In einem derartig großen Störfall wie dem hier beschriebenen ist somit die störungsunterdrückende Trennung zwischen dem Energieversorgungsnetz 1 bis 5 und der Last 15 während kurzer Zeitspannen aufgehoben. Im Zeitraum zwischen dem Zeitpunkt t8 und t9 wird jedoch von dem Zeitpunkt an, in dem das Absinken der Netzwechselspannung UW stärker wird als das durch die Speisung der Last 15 bewirkte Absinken der Spannung UC2 am zweiten Energiespeicher 14, die Leitphase der ersten Gleichrichterstufe, insbesondere der Dioden 7, beendet und damit die Trennung des Energieversorgungsnetzes 1 bis 5 von der Last 15 wieder hergestellt. Dies erfolgt zum Zeitpunkt t8′. Im Zeitraum zwischen dem t8′ und t9 erfolgt die Speisung der Last 15 aus dem zweiten Energiespeicher 14 in der gleichen Weise wie beim Normalbetrieb.

Zum zeitpunkt t9 wechseln die Schalterelemente 13, 14 in dem ab dem Zeitpunkt t6 neu angenommenen Zyklus ihren Zustand; das erste Schalterelement 13 tritt in eine Leitphase ein, während das zweite Schalterelement 14 gesperrt wird. Demzufolge wird die Entladung des zweiten Energiespeichers 14 durch die Speisung der Last 15 bis auf weiteres unterbrochen; da auch eine weitere Aufladung des zweiten Energiespeichers 14 noch nicht ansteht, verharrt die Spannung UC2 zunächst auf einem konstanten Wert. Gleichzeitig mit der Leitphase des ersten Schalterelements 13 tritt aber an der zweiten Gleichrichterstufe, insbesondere an der Diode 9, ebenfalls eine Leitphase auf. Daher werden vom Zeitpunkt t9 an sowohl der erste Energiespeicher 11 als auch die Last 15 aus dem Energieversorgungsnetz 1 bis 5 gespeist. Auch in diesem Zeitraum ist die Trennung zwischen der Last 15 und dem Energieversorgungsnetz 1 bis 5 wieder aufgehoben.

Nach einem vorbestimmten Zeitabschnitt, der im vorliegenden Beispiel vom Zeitpunkt t6 bis zum Zeitpunkt t11 reicht, werden die Zyklen der Leitphasen der Schalterelemente 13, 14 noch einmal um ein bestimmtes Zeitintervall - wiederum um eine halbe Periodendauer der Netzwechselspannung UW - gerafft. Dadurch tritt ab dem Zeitpunkt t11 wieder die ursprüngliche Zuordnung der Leitphasen zur Netzwechselspannung UW ein, so daß bezüglich dieser Zuordnung der Normalbetrieb der Schaltungsanordnung wieder hergestellt ist. Dadurch wechseln zum Zeitpunkt t11 das erste Schalterelement 13 in den gesperrten und das zweite Schalterelement 14 in den leitenden Zustand. Der erste Energiespeicher 11 hat zum Zeitpunkt t11 gerade wieder seine größtmögliche Aufladung erreicht und verharrt zunächst in diesem Zustand; der zweite Energiespeicher 12 wird über das zweite Schalterelement 14 erneut mit der Last 15 verbunden und dadurch weiter entladen.

Zum Zeitpunkt t12 werden - wie im Normalbetrieb - das erste Schalterelement 13 in den leitenden und das zweite Schalterelement 14 in den gesperrten Zustand geschaltet. Die Speisung der Last 15 erfolgt dann wieder aus dem ersten Energiespeicher 11, während der zweite Energiespeicher 12 erneut aus dem Energieversorgungsnetz 1 bis 5 aufgeladen wird. Damit ist auch bezüglich der Aufladungszustände der Energiespeicher 11, 12 der Normalbetrieb wieder erreicht.

Der resultierende zeitliche Verlauf der Spannung UL an der Last 15 in Fig. 8h) zeigt, daß bei der vorbeschriebenen Steuerung der Schalterelemente 13, 14 ohne größere Dimensionierung der Energiespeicher auch im beschriebenen Störungsfall eine lückenlose Speisung der Last 15 erreicht wird.

Eine andere Vorgehensweise zum Überbrücken von Störungen, durch die Ausfälle bei der Aufladung der Energiespeicher entstehen, könnte darin liegen, mit der auf die gestörte Halbwelle der Netzwechselspannung UW folgenden Halbwelle beide Energiespeicher 11, 12 parallel aufzuladen bei gleichzeitiger Speisung der Last 15. Damit würde jedoch ebenfalls die Trennung zwischen dem Energieversorgungsnetz 1 bis 5 und der Last 15 zeitweise aufgehoben, es würden jedoch zusätzlich Energieverluste durch Umladevorgänge zwischen beiden Energiespeichern 11, 12 auftreten, und schließlich wäre aufgrund der Dioden 55, 56 bzw. 132, 142 ein erhöhter Schaltungsaufwand nötig, um die Ausgleichsvorgänge zwischen den Energiespeichern 11, 12 überhaupt zu ermöglichen und damit eine parallele Aufladung der Energiespeicher 11, 12 in die Wege leiten zu können.

Entsprechend dem vorstehenden Beispiel für ein zweipoliges Energieversorgungsnetz läßt sich für ähnliche Störungen in einem mehrpoligen Energieversorgungsnetz eine Störung einer der Wechselspannungen an den Polen überbrücken, ohne dafür eine Vergrößerung der Kapazität der Energiespeicher vornehmen zu müssen. Die Anzahl der Schritte, in denen die Zyklen der Leitphasen jeweils gerafft werden, stimmt bevorzugt mit der Anzahl der Pole überein. Grundsätzlich wird dabei nach Ausfall der Aufladung eines der Energiespeicher zu Beginn der Leitphase des zugehörigen Schalterelements stets auf das nächste Schalterelement gesprungen und für dieses eine Leitphase begonnen, da der entsprechende Energiespeicher im Gegensatz zu den gestörten hinreichend Energie zum Speisen der Last enthält. Durch weitere gleichartige Sprünge wird dann zum ursprünglichen Zyklus der Leitphasen zurückgekehrt.

## Patentansprüche

1. Schaltungsanordnung zum Speisen einer Last (15) mit Energie aus einem wenigstens eine Wechselspannung (UW; R,S,T) führenden Energieversorgungsnetz (1 bis 5 bzw. 21, 22,23), wobei die Energie aus dem Wechselstromnetz (1 bis 5 bzw. 21,22,23) über eine Gleichrichteranordnung (7 bis 10), Energiespeicher (11;12;30;31;32) sowie Schalterelemente (13;14;33;34;35) der Last (15) zuführbar ist und die Energiespeicher (11;12;30;31;32) wechselweise über die durch eine Steuerschaltung (18;36; 191,192) schaltbaren Schalterelemente (13;14;33;34;35) in die Last (15) entladbar sind,
dadurch gekennzeichnet, daß die Gleichrichteranordnung (7 bis 10) zu jedem Pol (4,5; 21,22,23) des Energieversorgungsnetzes eine als ersten Zweig einer Graetz-Brücke ausgebildete Gleichrichterstufe (7,8; 9,10; 24,25; 26,27;28,29) umfaßt, jeder dieser Gleichrichterstufen einer der Energiespeicher (11;12;30;31;32) zugeordnet und durch sie aufladbar ist, jeder der Energiespeicher (11;12; 30;31;32) gemäß einem ergänzenden Zweig der Graetz-Brücke an die zugeordnete Gleichrichterstufe (7,8; 9,10; 24,25; 26,27; 28,29) angeschlossen ist und je eines der Schalterelemente (13;14;33;34;35) zum Verbinden jedes der Energiespeicher (11;12; 30;31;32) mit der Last (15) vorgesehen ist, wobei die Schalterelemente (13;14; 33;34;35) - zyklisch der Aufladung der Energiespeicher (11;12; 30;31;32) aus dem Energieversorgungsnetz (1 bis 5 bzw. 21,22,23) über die Gleichrichterstufen (7,8; 9,10; 24,25; 26,27; 28,29) folgend - außerhalb von Zeitintervallen der Aufladung (Leitphasen der Gleichrichterstufen (7,8; 9,10; 24,25; 6, 27;28,29) leitend schaltbar sind.

2. Schaltungsanordnung nach Anspruch 1,
dadurch gekennzeichnet, daß Zeitintervalle, in denen die Schalterelemente (13; 14; 33; 34; 35) leitend schaltbar sind (Leitphasen der Schalterelemente), nicht überlappend aneinandergrenzen.

3. Schaltungsanordnung nach Anspruch 2 mit einem wenigstens zweipoligen Energieversorgungsnetz (1 bis 5 bzw. 21, 22, 23),
dadurch gekennzeichnet, daß die Schaltungsanordnung derart eingerichtet ist, daß sich die Leitphase jedes Schalterelements (13; 14; 33; 34; 35) von einem Zeitpunkt, zu dem die Spannung am zugehörigen Pol (4, 5; 21, 22, 23) des Energieversorgungsnetzes (1 bis 5 bzw. 21, 22, 23) kleiner wird als wenigstens eine der Spannungen an den übrigen Polen (4, 5; 21, 22, 23), über einen der Anzahl der Pole (4, 5; 21, 22, 23) entsprechenden Teil der Periodendauer der Wechselspannung (UW; R, S, T) erstreckt.

4. Schaltungsanordnung nach Anspruch 1, 2 oder 3,
dadurch gekennzeichnet, daß der Steuerschaltung (18; 36; 191, 192) zum Steuern der Schalterelemente (13; 14; 33; 34; 35) die Spannungen von den Polen (4, 5; 21, 22, 23) des Energieversorgungsnetzes (1 bis 5 bzw. 21, 22, 23) zuführbar sind.

5. Schaltungsanordnung nach Anspruch, 1, 2, 3 oder 4,
dadurch gekennzeichnet, daß die Schalterelemente (13; 14; 33; 34; 35) als Transistoren (131; 141) ausgebildet sind und daß in jeden Energieübertragungskreis zwischen je einem der Energiespeicher (11; 12; 30; 31; 32) und der Last (15) über das zugehörige Schalterelement (13; 14; 33; 34; 35) je eine Diode (132; 142; 55; 56) eingefügt ist.

6. Schaltungsanordnung nach Anspruch 5,
dadurch gekennzeichnet, daß die Schalterelemente (13; 14; 33; 34; 35) mit einem ersten Anschluß der Last (15) und die Dioden (55, 56) mit einem zweiten Anschluß der Last (15) verbunden und daß die den Dioden (55; 56) zugewandten Verbindungen zwischen den Gleichrichterstufen (7, 8; 9, 10) und den zugehörigen Energiespeichern (11; 12) zyklisch gemäß der Aufeinanderfolge der Leitphasen vertauscht sind.

7. Schaltungsanordnung nach einem der vorhergehenden Ansprüche,
dadurch gekennzeichnet, daß die Steuerschaltung (191, 192) zu jedem Schalterelement (13; 14) ein Impedanznetzwerk (161, 162; 171, 172) umfaßt, das je mit einer Anzapfung mit dem zugehörigen Pol (4; 5) des Energieversorgungsnetzes (1 bis 5), mit einem ersten Endanschluß mit einem Steueranschluß (16; 17) des Schalterelements (13; 14) und mit einem zweiten Endanschluß mit dem vom Schalterelement (13; 14) abgewandten Anschluß des zugehörigen Energiespeichers (11; 12) verbunden ist.

8. Schaltungsanordnung nach einem der vorhergehenden Ansprüche,
dadurch gekennzeichnet, daß als Last (15) ein Schaltnetzteil vorgesehen ist und die Schalterelemente (13; 14; 33; 34; 35) als dessen Zerhackerschalter dienen.

9. Schaltungsanordnung nach Anspruch 8,
dadurch gekennzeichnet, daß die Steuerschaltung (18; 36) eine Einrichtung zur Steuerung der Schalterelemente (13; 14; 33; 34; 35) in Abhängigkeit von der am jeweils Energie in die Last (15) speisenden Energiespeicher (11; 12; 30; 31; 32) anliegenden Spannung sowie von der Energieaufnahme der Last (15) aufweist.

10. Schaltungsanordnung nach einem der vorhergehenden Ansprüche,
dadurch gekennzeichnet, daß die Steuerschaltung (18, 36) derart eingerichtet ist, daß nach Auftreten einer Störung in einer Wechselspannung (UW; R, S, T) des Energieversorgungsnetzes (1 bis 5 bzw. 21, 22, 23), durch die die Aufladung eines der Energiespeicher (11; 12; 30; 31; 32) gestört ist, insbesondere nach dem Ausfall einer Halbwelle dieser Wechselspannung, die Zyklen der Leitphasen der Schalterelemente (13; 14; 33; 34; 35) nach jeweils vorbestimmten Zeitabschnitten um bestimmte Zeitintervalle gerafft werden, bis die ursprüngliche Zuordnung der Leitphasen zu der Wechselspannung (UW; R, S, T) wieder erreicht ist.

## Claims

1. A circuit arrangement for powering a load (15) from a power supply mains (1 to 5; 21, 22, 23) having at least one alternating voltage (UW; R, S, T), which load (15) can be powered from the power supply mains (1 to 5; 21, 22, 23) *via* a rectifier arrangement (7 to 10), energy storage devices (11; 12; 30; 31; 32) and switching elements (13; 14; 33; 34; 35), which energy storage devices (11; 12; 30; 31; 32) can alternately be discharged into the load (15) *via* the switching elements (13; 14; 33; 34; 35) which are switchable by means of a control circuit (18; 36; 191, 192), characterized in that for each terminal (4, 5; 21, 22, 23) of the power supply mains the rectifier arrangement (7 to 10) comprises a rectifier stage (7, 8; 9, 10; 24, 25; 26, 27; 28, 29) constructed as a first arm of a bridge rectifier, each time one of the energy storage devices (11; 12; 30; 31; 32) is associated with and can be charged by each of said rectifier stages, each of the energy storage devices (11; 12; 30; 31; 32) is connected to the associated rectifier stage (7, 8; 9, 10; 24, 25; 26, 27; 28, 29) as a complementary arm of the bridge rectifier, and each time one of the switching elements (13; 14; 33; 34; 35) has been provided to connect each of the energy storage devices (11; 12; 30; 31; 32) to the load (15), which switching elements (13; 14; 33; 34; 35) can be rendered conductive outside charging time intervals (conductive phases of the rectifier stages (7, 8; 9, 10; 24, 25; 26, 27; 28, 29)), cyclically following the charging of the energy storage devices (11; 12; 30; 31; 32) from the power supply mains (1 to 5; 21, 22, 23) *via* the rectifier stages (7, 8; 9, 10; 24, 25; 26, 27; 28, 29).

2. A circuit arrangement as claimed in Claim 1, characterized in that time intervals in which the switching elements (13; 14; 33; 34; 35) can be rendered conductive (conductive phases of the switching elements) adjoin one another in a non-overlapping manner.

3. A circuit arrangement as claimed in Claim 2, in conjunction with a power supply mains (1 to 5; 21, 22, 23) having at least two terminals, characterized in that the circuit arrangement is constructed in such a manner that starting from an instant at which the voltage on the associated terminal (4, 5; 21, 22, 23) of the power supply mains (1 to 5, 21, 22, 23) becomes smaller than at least one of the voltages on the other terminals (4, 5; 21, 22, 23) the conductive phase of each switching element (13; 14; 33; 34; 35) covers a part of the period of the alternating voltage (UW; R, S, T), which part corresponds to the number of terminals (4, 5; 21, 22, 23).

4. A circuit arrangement as claimed in Claim 1, 2 or 3, characterized in that the voltages on the terminals (4, 5; 21, 22, 23) of the power supply mains (1 to 5; 21, 22, 23) can be applied to the control circuit (18; 36; 191, 192) to control the switching elements (13; 14; 33; 34; 35).

5. A circuit arrangement as claimed in Claim 1, 2, 3 or 4, characterized in that the switching elements (13; 14; 33; 34; 35) are constructed as transistors (131; 141) and in that each time one diode (132; 142; 55; 56) is included in each energy transfer circuit between each one of the energy storage devices (11; 12; 30; 31; 32) and the load (15) *via* the associated switching element (13; 14; 33; 34; 35).

6. A circuit arrangement as claimed in Claim 5, characterized in that the switching elements (13; 14; 33; 34; 35) are connected to a first terminal of the load (15) and the diodes (55, 56) are connected to a second terminal of the load (15) and in that the nodes, disposed nearer the diodes (55; 56), between the rectifier stages (7, 8; 9, 10) and the associated energy storage devices (11; 12) are cyclically interchanged in accordance with the sequence of the conductive phases.

7. A circuit arrangement as claimed in any one of the preceding Claims, characterized in that the control circuit (191, 192) comprises an impedance network (161, 162; 171, 172) for each switching element (13; 14), each network having a tap connected to the associated terminal (4; 5) of the power supply mains (1 to 5), having a first end terminal connected to a control terminal (16; 17) of the switching element (13; 14), and having a second end terminal connected to that terminal of the associated energy storage device (11; 12) which is remote from the switching element (13; 14).

8. A circuit arrangement as claimed in any one of the preceding Claims, characterized in that the load (15) is a switched mode power supply, and in that the switching elements (13; 14; 33; 34; 35) serve as chopper switches of said switched mode power supply.

9. A circuit arrangement as claimed in Claim 8, characterized in that the control circuit (18; 36) comprises a device for controlling the switching elements (13; 14; 33; 34; 35) depending on the voltage across the energy storage device (11; 12; 30; 31; 32) which instantaneously powers the load (15) and on the power consumed by the load (15).

10. A circuit arrangement as claimed in any one of the preceding Claims, characterized in that the control circuit (18; 36) is constructed in such a manner that after the occurrence of a disturbance in an alternating voltage (UW; R, S, T) of the power supply mains (1 to 5; 21, 22, 23), which disturbs the charging of one of the energy storage devices (11; 12; 30; 31; 32), particularly after the drop-out of a halfwave of said alternating voltage, the cycles of the conductive phases of the switching elements (13; 14; 33; 34; 35) are reduced by given time intervals after predetermined periods of time until the original relationship between the conductive phases and the alternating voltage (UW; R, S, T) has been restored.

## Revendications

1. Circuit pour l'alimentation d'une charge (15) en énergie à partir d'un réseau d'alimentation en énergie (1 à 6 ou 21, 22, 23) portant au moins une tension alternative (UW; R, S, T), l'énergie, à partir du réseau de courant alternatif (1 à 5 ou 21, 22, 23), pouvant être fournie à la charge (15) à travers un agencement de redresseurs (7 à 10), un accumulateur d'énergie (11; 12; 30; 31; 32) ainsi que des éléments interrupteurs (13; 14; 33; 34; 35) et les accumulateurs d'énergie (11; 12; 30; 31; 32) pouvant être déchargés alternativement dans la charge (15) à travers les éléments interrupteurs (13; 14; 33; 34; 35) commandables par un circuit de commande (18; 36; 191; 192), caractérisé en ce que, pour chaque borne (4, 5; 21, 22, 23) du réseau d'alimentation en énergie, l'agencement de redresseurs (7 à 10) comprend un étage redresseur (7, 8; 9, 10; 24, 25; 26, 27; 28, 29) réalisé sous la forme d'une première branche d'un pont de Graetz, en ce que l'un des accumulateurs d'énergie (11; 12; 30; 31; 32) est associé à chacun de ces étages redresseurs et peut être chargé par lui, en ce que chacun des accumulateurs d'énergie (11; 12; 30; 31; 32), suivant une branche complémentaire du pont de Graetz, est raccordé à l'étage redresseur associé (7, 8; 9, 10; 24, 25; 6, 27; 28, 29) et en ce que l'un quelconque des éléments interrupteurs (13; 14; 33; 34; 35) est prévu pour relier chacun des accumulateurs d'énergie (11; 12; 30; 31; 32) à la charge (15), les éléments interrupteurs (13; 14; 33; 34; 35) - en suivant de façon cyclique, à travers les étages redresseurs 7, 8; 9, 10; 24, 25; 26, 27; 28, 29), la charge des accumulateurs d'énergie (11; 12; 30; 31; 32), effectuée à partir du réseau d'alimentation d'énergie (1 à 5 ou 21, 22, 23) - pouvant être rendus conducteurs en dehors d'intervalles de temps de charge (phases de conduction des étages redresseurs (7, 8; 9, 10; 24, 25; 6, 27; 28, 29)).

2. Circuit selon la revendication 1, caractérisé en ce que des intervalles de temps pendant lesquels les éléments interrupteurs (13; 14; 33; 34; 35) sont rendus conducteurs (phases de conduction des éléments interrupteurs) sont contigus les uns aux autres sans se chevaucher.

3. Circuit selon la revendication 2, muni d'un réseau d'alimentation en énergie au moins bipolaire (1 à 5 ou 21, 22, 23), caractérisé en ce qu'il est agencé de façon que, à partir d'un instant auquel la tension sur la borne correspondante (4, 5; 21, 22, 23) du réseau d'alimentation en énergie (1 à 5 ou 21, 22, 23) devient inférieure à au moins l'une des tensions sur les autres bornes (4, 5; 21, 22, 23) la phase de conduction de chaque élément interrupteur (13; 14; 33; 34; 35) s'étend sur une partie de la durée de période de la tension alternative (UW; R, S, T) qui correspond au nombre de pôles (4, 5; 21, 22, 23).

4. Circuit selon la revendication 1, 2 ou 3, caractérisé en ce que les tensions sur les bornes (4, 5; 21, 22, 23) du réseau d'alimentation en énergie (1 à 5 ou 21, 22, 23) peuvent être appliquées au circuit de commande (18; 36; 191, 192) pour commander les éléments interrupteurs (13; 14; 33; 34; 35).

5. Circuit selon la revendication 1, 2, 3 ou 4, caractérisé en ce que les éléments interrupteurs (13; 14; 33; 34; 35) sont réalisés sous la forme de transistors (131; 141) et en ce que, dans chaque circuit de transmission d'énergie compris entre chacun des accumulateurs d'énergie (11; 12; 30; 31; 32) et la charge (15), à travers l'élément interrupteur associé (13; 14; 33; 34; 35), est insérée une diode (132; 142; 55; 56).

6. Circuit selon la revendication 5, caractérisé en ce que les éléments interrupteurs (13; 14; 33; 34; 35) sont reliés à une première borne de la charge (15) tandis que les diodes (55, 56) sont reliées à une seconde borne de la charge (15) et en ce que les liaisons entre les étages redresseurs (7, 8; 9, 10) et les accumulateurs d'énergie associés (11; 12) situées face aux diodes (55; 56) sont échangées de façon cyclique selon la succession des phases de conduction.

7. Circuit selon l'une des revendications précédentes, caractérisé en ce que le circuit de commande (191, 192) comprend, pour chaque élément interrupteur (13; 14) un réseau d'impédances (161, 162; 171, 172) qui est relié par une prise à la borne associée (4; 5) du réseau d'alimentation en énergie (1 à 5), par une première borne terminale à une borne de commande (16; 17) de l'élément interrupteur (13; 14) et par une seconde borne terminale à la borne de l'accumulateur d'énergie associée (11; 12) située à l'opposé de l'élément interrupteur (13; 14).

8. Circuit selon l'une des revendications précédentes, caractérisé en ce que, comme charge (15), est prévu un circuit d'alimentation à découpage et en ce que les éléments interrupteurs (13; 14; 33; 34; 35) lui servent de hacheurs.

9. Circuit selon la revendication 8, caractérisé en ce que le circuit de commande (18; 36) est pourvu d'un dispositif pour commander les éléments interrupteurs (13; 14; 33; 34; 35) en fonction, d'une part, de la tension présente aux bornes de l'accumulateur d'énergie (11; 12; 30; 31; 32) qui fournit de l'énergie à la charge (15) et, d'autre part, de l'énergie prélevée par la charge (15).

10. Circuit selon l'une des revendications précédentes, caractérisé en ce que le circuit de commande (18, 36) est agencé de façon que, après l'apparition d'une perturbation dans une tension alternative (UW; R, S, T) du réseau d'alimentation en énergie (1 à 5 ou 21, 22, 23) sous l'effet de laquelle l'opération de charge de l'un des accumulateurs d'énergie (11; 12; 30; 31; 32) se trouve perturbée, notamment après la suppression d'un demi-cycle de cette tension alternative, les cycles des phases de conduction des éléments interrupteurs (13; 14; 33; 34; 35), après des périodes prédéterminées, sont réduits d'intervalles de temps déterminés jusqu'à ce que l'attribution originale des phases de conduction à la tension alternative (UW; R, S, T) soit à nouveau atteinte.
